# EUROPÄISCHE PATENTSCHRIFT

(11) **EP 1 884 607 B1**
(45) Veröffentlichungstag und Bekanntmachung des Hinweises auf die Patenterteilung: **14.09.2011**
(21) Anmeldenummer: 07013052.1
(22) Anmeldetag: 04.07.2007
(51) Int. Cl.: E04F 15/10, E04F 15/16, B29C 43/30, B29C 59/02, B29C 70/64

(54) **Bodenbelag**
Floor covering
Revêtement de sol

(30) Priorität: 24.07.2006 DE 102006034646
(43) Veröffentlichungstag der Anmeldung: 06.02.2008
(73) Patentinhaber: Nora Systems GmbH, 69469 Weinheim (DE)
(72) Erfinder: Graab, Gerhard, 68199 Mannheim (DE); Schmitt, Jochen, 69469 Weinheim-Rippenweiher (DE); Grun, Gregor, 69469 Weinheim (DE)
(74) Vertreter: Reiser, Tonio Andreas

(56) Entgegenhaltungen:
- WO-A1-2006/037977
- WO-A2-03/100162
- DE-A1- 10 126 122
- DE-U1- 9 405 554
- US-A1- 2004 211 130
- ACHIM FRICK ET AL: "DSC-Prüfung in der Anwendung" 1. Januar 2006 (2006-01-01), DSC-PRÜFUNG IN DER ANWENDUNG, DE, PAGE(S) 1 - 12 , XP007911023 ISBN: 9783446405639 * Seite 51 - Seite 61 *

## Beschreibung

### Technisches Gebiet

Die Erfindung betrifft einen Bodenbelag mit hoher Trittsicherheit, welcher ein im Wesentlichen bahn- oder plattenförmiges Grundmaterial aus einem elastomeren Werkstoff mit einer körnige Partikel aufweisenden rutschhemmenden Oberfläche umfasst.

### Stand der Technik

Ein Bodenbelag der gattungsgemäßen Art ist aus der WO 03/100162 bekannt. Dieser Bodenbelag weist einen Träger aus einem Kunststoff auf, vorzugsweise aus einem thermoplastischen Polymer oder einem thermoplastischen Elastomer. Zur Erhöhung der Trittsicherheit ist die Oberfläche des Trägers mittels körniger Partikel aufgeraut. Diese körnigen Partikel umfassen vorzugsweise harte Partikel aus Quarz, Siliziumcarbid, Aluminiumoxid und/oder Schmirgelpartikel.

Nachteilig an dem bekannten Bodenbelag ist, dass er aufgrund des sehr harten Partikelmaterials nur schwer schneidbar ist (Korundproblem). Hieraus resultieren Probleme bei der Konfektionierung und/oder Weiterverarbeitung des Bodenbelags.

Aus der DE 101 26 122 ist ein Bodenbelag bestehend aus einem elastomeren Grundmaterial bekannt, der zur Verbesserung der Verschließfestigkeit mit körnigen Partikeln aus PVC versehen ist, welche eine höhere Härte als das elastomere Grundmaterial aufweisen.

### Darstellung der Erfindung

Der Erfindung liegt die Aufgabe zugrunde, einen Bodenbelag bereitzustellen, der sich durch eine hohe Trittsicherheit auszeichnet und darüber hinaus einfach und kostengünstig herstell- und verarbeitbar ist.

Diese Aufgabe wird mit einem Bodenbelag mit allen Merkmalen des Patentanspruchs 1 gelöst. Vorteilhafte Ausgestaltungen der Erfindung sind in den Unteransprüchen beschrieben.

Der erfindungsgemäße Bodenbelag mit hoher Trittsicherheit umfasst ein im Wesentlichen bahn- oder plattenförmiges Grundmaterial aus einem elastomeren Werkstoff. Die Oberfläche des Bodenbelags ist mittels körniger Partikel aufgeraut und wirkt damit rutschhemmend. Erfindungsgemäß werden körnige Partikel aus einem polymeren Material eingesetzt, dessen Härte größer ist als die des elastomeren Werkstoffs. Es hat sich in überraschender Weise gezeigt, dass diese Materialien, obwohl sie deutlich weicher sind als mineralische Partikel, wie zum Beispiel Korund, und darüber hinaus auch noch zur Ausbildung eher abgerundeter als scharfer Kanten neigen, gleichwohl zu einer hohen Trittsicherheit führen. Im Gegensatz zu den Bodenbelägen mit mineralischen Partikeln haben sie jedoch den Vorteil der einfachen Herstellbarkeit und Weiterverarbeitbarkeit. Insbesondere lässt sich ein erfindungsgemäßer Bodenbelag sehr gut schneiden.

Erfindungsgemäß hat sich gezeigt, dass gute Ergebnisse bezüglich der rutschhemmenden Wirkung bereits dann erzielt werden, wenn die Härte des polymeren Materials um 10 Shore D höher ist als die des elastomeren Werkstoffs.

Als polymeres Material können prinzipiell Thermoplaste und Duroplaste zum Einsatz kommen. Beide Materialien können beispielsweise in Form von Partikeln in das Grundmaterial eingemischt werden. Zum Aufstreuen sind Duroplaste weniger geeignet, da sie, wie auch die aus dem Stand der Technik bekannten Korundpartikel, bei der Vulkanisation und der dadurch bedingten Verflüssigung des Grundmaterials in dieses einsinken können.

Als thermoplastische Polymere, die in das Grundmaterial eingemischt werden, sind generell solche geeignet, deren Schmelztemperatur höher ist, als die bei späteren Fertigungsschritten auftretenden hohen Temperaturen. Ist sichergestellt, dass bei späteren Fertigungsschritten keine Scherkräfte auftreten, die zu einer Vermischung der Materialien miteinander führen können, so können auch thermoplastische Polymere mit niedrigeren Schmelztemperaturen verwendet werden Das Aufschmelzen des Partikelmaterials an sich ist unkritisch, so lange die Partikeltropfen als solche erhalten bleiben. Dieses ist, solange keine Scherkräfte einwirken, in der Regel schon aufgrund der stark unterschiedlichen Viskositäten der Materialien gewährleistet.

Vorzugsweise kommen teilkristalline thermoplastische Polymere zum Einsatz.

Im Falle der aufgestreuten Partikel aus teilkristallinem thermoplastischem Material ist es sogar erwünscht, dass das Partikelmaterial während der Vulkanisation des Grundmaterials aufschmilzt, um auf dessen Oberfläche aufzuschwimmen. Die Partikeltropfen verbleiben somit während der Vulkanisation an der Oberfläche erhalten und sinken nicht in das verflüssigte Grundmaterial ein. Nach dem Abkühlen rekristallisieren die Partikeltropfen wieder zu körnigen Partikeln.

Diese Eigenschaft lässt sich über die Lage des Maximums eines exothermen Schmelzpeaks des thermoplastischen polymeren Materials in einem mittels eines Differential-Scanning-Calorimetry (DSC)-Verfahrens gemessenen Thermogramms beschreiben: Es hat sich gezeigt, dass bei den üblicherweise für Bodenbeläge verwendeten Elastomeren und den für die Herstellung der Bodenbeläge üblicherweise eingesetzten Verfahren insbesondere solche thermoplastischen, vorzugsweise teilkristallinen, Polymere besonders geeignet sind, die bei einer Prüfung in der Differential Scanning Calorimetry (DSC) nach DIN 53765 im Thermogramm in einem Temperaturbereich von 100 °C bis 250 °C ein Maximum eines exothermen Schmelz-Peaks aufweisen. Liegt der Schmelzpunkt in dem angegebenen Temperaturbereich, dann schmilzt das thermoplastische Polymer während der Vulkanisation des Grundmaterials zu einem Tropfen auf, der im Falle der aufgestreuten Partikel nicht in das Grundmaterial einsinkt, sondern auf der Oberfläche schwimmt. Im Anschluss an den Vulkanisationsprozess rekristallisiert der Tropfen auf der Oberfläche wieder zu einem körnigen Partikel. Die rutschhemmenden Eigenschaften bleiben erhalten.

Die Auswahl eines geeigneten thermoplastische Polymers im Einzelfall bei einem vorgegebenen elastomeren Grundmaterial und einer vorgegebenen Prozessführung liegt im Griffbereich des Fachmanns. Er braucht hierzu nicht erfinderisch tätig zu werden.

Generell können die thermoplastischen Polymere beispielsweise reine Homopolymere oder Copolymere oder durch Pfropfung veränderte Homo- oder Copolymere umfassen. Vorzugsweise umfassen sie solche thermoplastischen Polymere, die aus der Gruppe der Polyolefine, der modifizierten Polyolefine, der teilkristallinen Polyamide und/oder der Polyester ausgewählt sind. Die eingesetzten Polymere können z.B. auch mit herkömmlichen Propfungsmitteln, wie Maleinsäureanhydrid und/oder Acrylsäure gepropft sein, um die Einbindung der Partikel in die Matrix zu verbessern.

Ein erfindungsgemäßer Bodenbelag kann auf verschiedene Art und Weisen hergestellt werden. So können die körnigen Partikel beispielsweise, wie bereits oben erwähnt, auf den noch nicht vulkanisierten Rohling der Elastomerbahn einfach aufgestreut und anschließend mit dem Rohling einer Temperaturbehandlung zur Vulkanisation unterzogen werden, wobei die Partikel vorzugsweise mit aufgeschmolzen werden.

Ebenso ist es möglich, wie ebenfalls oben bereits ausgeführt wurde, die körnigen Partikel in das Grundmaterial aus elastomerem Werkstoff einzumischen. Bei dieser letzteren Variante können dann noch zusätzlich körnige Partikel auf die Oberfläche aufgestreut werden, wobei das Verfahren dann, wie oben beschrieben, fortgesetzt wird.

Eine weitere Variante besteht darin, dass der Rohling der Bahn aus dem Grundmaterial aus elastomerem Werkstoff, welchem körnige Partikel beigemischt wurden, aufgespalten und anschließend ggf. nach Aufstreuen zusätzlicher Partikel einem Vulkanisationsprozess unterzogen wird. Auch bei dieser Verfahrensführung kann es vorteilhaft sein, auch für die eingemischten Partikel, die nach dem Aufspalten der Grundbahn ebenfalls zu einem gewissen Teil an der Oberfläche der aufgespaltenen Bahn liegen, ein thermoplastisches, vorzugsweise teilkristallines, Polymer einzusetzen, das im Bereich der Vulkanisationstemperatur des elastomeren Grundmaterials aufschmilzt, um ein Einsinken auch dieser Partikel in das Grundmaterial während der Vulkanisation zu verhindern.

Das Beimischen der körnigen Partikel hat gegenüber dem einfachen Aufstreuen den Vorteil, dass ein solchermaßen hergestellter Bodenbelag eine höhere Abriebfestigkeit und damit eine längere Lebensdauer aufweist. Außerdem ermöglicht es die Herstellung eines Bodenbelags durch Aufspalten einer Grundbahn.

Im Falle des Beimischens der körnigen Partikel in das Grundmaterial ist zu beachten, dass diese Mischprozesse üblicherweise bei Temperaturen zwischen 100°C und 130 °C durchgeführt werden. Die Schmelztemperatur des für die körnigen Partikel verwendeten thermoplastischen Polymers, die, wie oben beschrieben, durch die Lage des Maximums des exothermen Schmelzpeaks des Materials definiert wird, sollte daher vorzugsweise > 130 °C betragen. Weitere Verfahrensschritte können auch bei höheren Temperaturen als die Schmelztemperatur des thermoplastischen Polymers geführt werden, solange sichergestellt ist, dass bei diesen Temperaturen keine Scherkräfte auf die Materialien einwirken, durch welche das Partikelmaterial sich mit dem Grundmaterial vermischen könnte.

Je nach Art der Herstellung eines erfindungsgemäßen Bodenbelags ergeben sich unterschiedliche Anforderungen an die verwendeten Korngrößen und Mengen des Partikelmaterials. Es hat sich gezeigt, dass im Falle des Aufstreuens der körnigen Partikel die besten rutschhemmenden Eigenschaften dann erzielt werden, wenn die mittlere Korngröße der Partikel, gemessen durch Siebanalyse nach DIN 66165, zwischen 100 µm und 800 µm, vorzugsweise bei etwa 300 µm liegt. Bei Partikelgrößen < 100 µm verschlechtern sich die rutschhemmenden Eigenschaften zu stark, bei Partikelgrößen > 800 µm verschlechtern sich die mechanischen und brandtechnischen Eigenschaften bei den für elastische Bodenbeläge üblichen Belagsstärken von 2 - 5 mm zu stark.

Die Menge an aufgestreuten körnigen Partikel, ausgedrückt über das Gesamtvolumen, sollte zwischen 30 cm³/m² und 360 cm³/m², vorzugsweise zwischen 100 cm³/m² und 250 cm³/m² betragen. Bei Mengen unterhalb von 30 cm³/m² nehmen die rutschhemmenden Eigenschaften zu stark ab, bei Mengen größer als 360 cm³/m² besteht die Gefahr, dass sich ebenfalls die mechanischen und brandtechnischen Eigenschaften des Bodenbelags zu stark verschlechtern.

Im Falle des Einmischens der körnigen Partikel sollte die mittlere Korngröße der Partikel, gemessen durch Siebanalyse nach DIN 66165, zwischen 100 µm und 2000 µm, vorzugsweise bei etwa 500 µm liegen. Bei Korngrößen unterhalb von 100 µm nehmen wiederum die rutschhemmenden Eigenschaften zu stark ab, bei Korngrößen größer als 2000 µm verschlechtern sich, wie auch in den obigen Fällen, die mechanischen und brandtechnischen Eigenschaften.

Der Anteil der eingemischten Partikel liegt vorzugsweise zwischen 10 Vol.-% und 40 Vol.-%, vorzugsweise zwischen 14 Vol.-% und 25 Vol.-%, des Grundmaterials. Bei einem Anteil von weniger als 10 Vol.-% nehmen die rutschhemmenden Eigenschaften zu stark ab, bei einem Anteil größer als 40 Vol.-% verschlechtern sich die mechanischen und brandtechnischen Eigenschaften.

Als Grundmaterial kommen alle Elastomere in Frage, die für die Anwendung als Bodenbelag geeignet sind. Vorzugsweise umfasst das Grundmaterial die Elastomere SBR (Poly-Styrol-Butadien-Kautschuk), NBR (Nitril-Butadien-Kautschuk), EPM (Ethylen-Propylen-Kautschuk), EPDM (Ethylen-Propylen-Dien-Kautschuk), EVA (Ethylenvinylacetat), CSM (Chlorsulfonyl-Polyethylen-Kautschuk), VSi (Silikon-Kautschuk) und/oder AEM (Ethylen-Acrylat-Kautschuk), sowohl schwefelvernetzt, peroxidvernetzt als auch additionsvernetzt. Es können auch Mischungen der genannten Elastomere zur Anwendung kommen.

Bei einem erfindungsgemäßen Bodenbelag kann darüber hinaus das Grundmaterial noch in an sich bekannter Weise Füllstoffe mineralischer Natur, wie z. B. Clay, Kreide, Kieselsäuren, und/oder Kieselkreide, umfassen. Diese Füllstoffe haben die Aufgabe, die physikalischen Eigenschaften, wie zum Beispiel die Härte und den Abrieb des Gummicompounds einzustellen. Darüber hinaus werden die Füllstoffe auch zur Verbesserung der Brandeigenschaften verwendet. Üblicherweise werden sie in Mengen von 10-70 Gew.-% mit Korngrößen < 100 µm zugegeben.

Ein erfindungsgemäßer Bodenbelag kann sowohl als Bahn als auch als Plattenmaterial Anwendung finden.

Nachfolgend wird die Erfindung anhand der Ausführungsbeispiele näher erläutert:
1. Ausführungsbeispiel:
   Auf ein bahnförmiges Grundmaterial aus einer schwefelvernetzbaren SBR-Mischung wurden pro cm² 275 cm³ eines Polypropylenpulvers mit einer mittleren Teilchengröße von 300 µm aufgestreut. Das Maximum des mittels DSC nach DIN 53765 ermittelten Schmelzpeaks des Polypropylenpulvers lag bei 163 °C. Die mit dem Pulver bestreute Bahn wurde anschließend in einer kontinuierlichen Vulkanisationsanlage mit Bandpresse bei 180 °C für eine Zeitdauer von 5 min einem Vulkanisationsprozess unterworfen. Das Ergebnis ist ein elastomerer Bodenbelag, der in einer Rutschprüfung mit einem British Pendulum Tester (BPT) einen Rutschsicherheitswert von 40 Skalenteilen bei Prüfung mit Wasser als Gleitmedium erzielt.
2. Ausführungsbeispiel
   In eine schwefelvernetzbare SBR-Mischung wurden 40 Vol.-% des obigen Pulvers bei einer Auswurftemperatur von 120C° eingemischt. Nach Kalandrieren eines Rohlings aus diesem Material wurde dieser mittig gespalten und der resultierende Rohling in einer nicht kontinuierlichen Vulkanisationsanlage bei 180 °C für eine Zeitdauer von 7 min einem Vulkanisationsprozess unterzogen. Der resultierende elastomere Bodenbelag erzielte mit der oben beschriebenen Prüfung einen Rutschsicherheitswert von 36 Skalenteilen bei Prüfung mit Wasser als Gleitmedium.
3. Ausführungsbeispiel
   In einer dritten Variante wurde aus der in Ausführungsbeispiel 2 beschriebenen Mischung mit Polypropylenpulver eine Bahn kalandriert, und auf diese Bahn wurden zusätzlich noch 275 cm³/cm² des gleichen Polypropylenpulvers aufgestreut. Die Bahn wurde dann in einer kontinuierlichen Vulkanisationsanlage mit Bandpresse bei 180 °C für eine Zeitdauer von 5 min einem Vulkanisationsprozess unterzogen. Das Resultat war eine elastomerer Bodenbelag, der mit der obigen Testmethode einen Rutschsicherheitswert von 40 Skalenteilen bei Prüfung mit Wasser als Gleitmedium erreichte.
1. Vergleichsbeispiel:
   Ein bahnförmiges Grundmaterial aus einer schwefelvernetzbaren SBR-Mischung analog Ausführungsbeispiel 1, aber ohne Pulverauftrag, wurde in einer kontinuierlichen Vulkanisationsanlage mit Bandpresse bei 180 °C für eine Zeitdauer von 5 min einem Vulkanisationsprozess unterworfen. Der daraus resultierende Bodenbelag erzielte nach der oben beschriebenen Testmethode einen Rutschsicherheitswert von nur 12 Skalenteilen bei Prüfung mit Wasser als Gleitmedium.
2. Vergleichsbeispiel:
   In einem weiteren Vergleichsversuch wurde ein bahnförmiges Grundmaterial aus einer schwefelvernetzbaren SBR-Mischung analog Ausführungsbeispiel 1, mit 800 g/m² Korundpartikeln bestreut und in einer kontinuierlichen Vulkanisationsanlage mit Bandpresse bei 180 °C für eine Zeitdauer von 5 min einem Vulkanisationsprozess unterworfen. Nach der Vulkanisation war der Großteil der Korundpartikel in das Grundmaterial eingesunken und von diesem umschlossen. Der daraus resultierende Bodenbelag erzielte nach der oben beschriebenen Testmethode einen Rutschsicherheitswert von nur 14 Skalenteilen bei Prüfung mit Wasser

Die obigen Ausführungsbeispiele zeigen, dass ein erfindungsgemäßer Bodenbelag sowohl gegenüber einem Belag ohne rutschhemmende Oberfläche als auch gegenüber einem Belag mit aufgestreuten KorundPartikeln einen deutlich verbesserten Rutschsicherheitswert zeigt.

Darüber hinaus zeichneten sich die gemäß den Ausführungsbeispielen 2 und 3 hergestellten Bodenbeläge mit beigemischten körnigen Partikeln aus Polypropylen gegenüber dem in Ausführungsbeispiel 1 verwendeten Grundmaterial ohne entsprechende Beimischung durch eine um mehr als 20 % erhöhte Abriebfestigkeit aus, wie eine nach ISO 9352 (Taber-Abrieb) durchgeführte Prüfung an den gemäß den Ausführungsbeispielen hergestellten Bodenbelägen ergab.

## Patentansprüche

1. Bodenbelag mit hoher Trittsicherheit, umfassend ein im Wesentlichen bahn- oder plattenförmiges Grundmaterial aus einem elastomeren Werkstoff mit einer körnige Partikel aufweisenden, rutschhemmenden Oberfläche, wobei die körnigen Partikel aus einem polymeren Material bestehen, welches eine Härte aufweist, die deutlich höher als die des elastomeren Werkstoffs ist, **dadurch gekennzeichnet, dass** die Härte des polymeren Materials um mindestens 10 Shore D höher ist als die Härte des elastomeren Werkstoffs.

2. Bodenbelag nach Anspruch 1, **dadurch gekennzeichnet, dass** das polymere Material ein thermoplastisches und/oder ein duroplastisches Material umfasst, welches auf die Oberfläche des Grundmaterials aufgestreut und/oder in das Grundmaterial eingemischt ist.

3. Bodenbelag nach Anspruch 2, **dadurch gekennzeichnet, dass** das thermoplastische Material ein teilkristallines thermoplastisches Material ist.

4. Bodenbelag nach Anspruch 3, **dadurch gekennzeichnet, dass** das thermoplastische teilkristalline Material solche thermoplastischen Polymere umfasst, deren Schmelzpunkt unterhalb oder im Bereich der Vulkanisationstemperatur des elastomeren Grundmaterials liegt.

5. Bodenbelag nach Anspruch 4, **dadurch gekennzeichnet, dass** das teilkristalline, thermoplastische polymere Material solche thermoplastischen Polymere umfasst, die bei einer Prüfung in der Differential Scanning Calorimetry (DSC) nach DIN 53765 im Thermogramm in einem Temperaturbereich von 100 °C bis 250 °C einen exothermen Schmelz-Peak aufweisen.

6. Bodenbelag nach einem der Ansprüche 2 bis 5, **dadurch gekennzeichnet, dass** die thermoplastischen Polymere solche umfassen, die aus der Gruppe der Polyolefine, der modifizierten Polyolefine, der teilkristallinen Polyamide und/oder der Polyester ausgewählt sind.

7. Bodenbelag nach einem der Ansprüche 1 bis 6, bei welchem die Partikel auf die Oberfläche aufgestreut sind, **dadurch gekennzeichnet, dass** die mittlere Korngröße der Partikel, gemessen durch Siebanalyse nach DIN 66165 zwischen 100 µm und 800 µm, vorzugsweise bei etwa 300 µm liegt.

8. Bodenbelag nach einem der Ansprüche 1 bis 7, bei welchem die Partikel auf die Oberfläche aufgestreut sind, **dadurch gekennzeichnet, dass** die Menge der aufgestreuten Partikel, ausgedrückt über das Gesamtvolumen der aufgestreuten Partikel, zwischen 30 cm³/m² und 360 cm³/m², vorzugsweise zwischen 100 cm³/m² und 250 cm³/m² beträgt.

9. Bodenbelag nach einem der Ansprüche 1 bis 8, bei welchem die Partikel in das Grundmaterial eingemischt sind, **dadurch gekennzeichnet, dass** die mittlere Korngröße der Partikel, gemessen nach Siebanalyse nach DIN 66165 zwischen 100 µm und 2000 µm, vorzugsweise bei etwa 500 µm liegt.

10. Bodenbelag nach einem der Ansprüche 1 bis 9, bei welchem die Partikel in das Grundmaterial eingemischt sind, **dadurch gekennzeichnet, dass** der Anteil der eingemischten Partikel zwischen 10 und 40 Vol.-%, vorzugsweise zwischen 14 und 25 Vol.-%, des Grundmaterials liegt.

11. Bodenbelag nach einem der Ansprüche 1 bis 10, **dadurch gekennzeichnet, dass** das Grundmaterial die Elastomere SBR (PolyStyrol-Butadien-Kautschuk), NBR (Nitrile-Butadien-Kautschuk), EPM (Ethylen-Propylen-Kautschuk), EPDM (Ethylen-Propylen-Dien-Kautschuk), EVA (Ethylenvinylacetat), CSM (Chlorsulfonyl-Polyethylen-Kautschuk), VSi (Silikon-Kautschuk) und/oder AEM (Ethylen-Acrylat-Kautschuk), sowohl schwefelvernetzt, peroxidvemetzt als auch additionsvemetzt, umfasst.

12. Bodenbelag nach einem der Ansprüche 1 bis 11, **dadurch gekennzeichnet, dass** das Grundmaterial in an sich bekannter Weise Füllstoffe mineralischer Natur, wie z. B. Clay, Kreide, Kieselsäuren, und/oder Kieselkreide, umfasst.

## Claims

1. Floor covering with high level of nonslip property, comprising a base material made of an elastomeric material which is in essence in the form of a web or sheet, with a slip-inhibiting surface which comprises granular particles, where the granular particles are composed of a polymeric material, the hardness of which is markedly higher than that of the elastomeric material, **characterized in that** the hardness of the polymeric material is higher by at least 10 Shore D than the hardness of the elastomeric material.

2. Floor covering according to Claim 1, **characterized in that** the polymeric material comprises a thermoplastic and/or a thermoset material which has been scattered onto the surface of the base material and/or has been incorporated by mixing into the base material.

3. Floor covering according to Claim 2, **characterized in that** the thermoplastic material is a semicrystalline thermoplastic material.

4. Floor covering according to Claim 3, **characterized in that** the thermoplastic semicrystalline material comprises thermoplastic polymers of which the melting point is below, or in the region of, the vulcanization temperature of the elastomeric base material.

5. Floor covering according to Claim 4, **characterized in that** the semicrystalline, thermoplastic polymeric material comprises thermoplastic polymers which have an exothermic melting peak in a temperature range from 100°C to 250°C in the thermogram when tested by differential scanning calorimetry (DSC) to DIN 53765.

6. Floor covering according to any of Claims 2 to 5, **characterized in that** the thermoplastic polymers comprise those selected from the group of the polyolefins, of the modified polyolefins, of the semicrystalline polyamides and/or of the polyesters.

7. Floor covering according to any of Claims 1 to 6, where the particles have been scattered onto the surface, **characterized in that** the average grain size of the particles, measured via sieve analysis to DIN 66165, is from 100 µm to 800 µm, preferably about 300 µm.

8. Floor covering according to any of Claims 1 to 7, where the particles have been scattered onto the surface, **characterized in that** the amount of the particles applied by scattering, expressed by way of the total volume of the particles applied by scattering, is from 30 cm³/m² to 360 cm³/m², preferably from 100 cm³/m² to 250 cm³/m².

9. Floor covering according to any of Claims 1 to 8, where the particles have been incorporated by mixing into the base material, **characterized in that** the average grain size of the particles, measured by sieve analysis to DIN 66165, is from 100 µm to 2000 µm, preferably about 500 µm.

10. Floor covering according to any of Claims 1 to 9, where the particles have been incorporated by mixing into the base material, **characterized in that** the proportion of the particles incorporated by mixing is from 10 to 40% by volume, preferably from 14 to 25% by volume, of the base material.

11. Floor covering according to any of Claims 1 to 10, **characterized in that** the base material comprises the elastomers SBR (polystyrene-butadiene rubber), NBR (nitrile-butadiene rubber), EPM (ethylene-propylene rubber), EPDM (ethylene-propylene-diene rubber), EVA (ethylene-vinyl acetate), CSM (chlorosulfonyl polyethylene rubber), VSi (silicone rubber) and/or AEM (ethylene-acrylate rubber), either sulphur-crosslinked or peroxide-crosslinked or else addition-crosslinked.

12. Floor covering according to any of Claims 1 to 11, **characterized in that** the base material comprises, in a manner known per se, mineral fillers, e.g. clay, chalk, silicas, and/or siliceous chalk.

## Revendications

1. Revêtement de sol avec un effet antidérapant élevé, comprenant un matériau de base essentiellement en forme de bande ou de plaque constitué par un matériau élastomère avec une surface antiglisse présentant des particules granuleuses, les particules granuleuses étant constituées par un matériau polymère qui présente une dureté qui est nettement supérieure à celle du matériau élastomère, **caractérisé en ce que** la dureté du matériau polymère est supérieure d'au moins 10 Shore D à la dureté du matériau élastomère.

2. Revêtement de sol selon la revendication 1, **caractérisé en ce que** le matériau polymère comprend un matériau thermoplastique et/ou thermodurcissable qui est répandu à la surface du matériau de base et/ou intégré dans le matériau de base.

3. Revêtement de sol selon la revendication 2, **caractérisé en ce que** le matériau thermoplastique est un matériau thermoplastique partiellement cristallin.

4. Revêtement de sol selon la revendication 3, **caractérisé en ce que** le matériau thermoplastique partiellement cristallin comprend des polymères thermoplastiques dont le point de fusion est inférieur à ou situé dans la plage de la température de vulcanisation du matériau de base élastomère.

5. Revêtement de sol selon la revendication 4, **caractérisé en ce que** le matériau polymère thermoplastique partiellement cristallin comprend des polymères thermoplastiques qui présentent, lors d'un test en calorimétrie différentielle par balayage (Differential Scanning Calorimetry - DSC) selon la norme DIN 53765, dans le thermogramme, un pic de fusion exothermique dans une plage de température de 100°C à 250°C.

6. Revêtement de sol selon l'une quelconque des revendications 2 à 5, **caractérisé en ce que** les polymères thermoplastiques comprennent ceux qui sont choisis dans le groupe des polyoléfines, des polyoléfines modifiées, des polyamides partiellement cristallins et/ou des polyesters.

7. Revêtement de sol selon l'une quelconque des revendications 1 à 6, dans lequel les particules sont répandues à la surface, **caractérisé en ce que** la grosseur moyenne des particules, mesurée par analyse par tamisage selon la norme DIN 66165, se situe entre 100 µm et 800 µm, de préférence à environ 300 µm.

8. Revêtement de sol selon l'une quelconque des revendications 1 à 7, dans lequel les particules sont répandues à la surface, **caractérisé en ce que** la quantité de particules répandues, exprimée par le volume total des particules répandues, se situe entre 30 cm³/m² et 360 cm³/m², de préférence entre 100 cm³/m² et 250 cm³/m².

9. Revêtement de sol selon l'une quelconque des revendications 1 à 8, dans lequel les particules sont intégrées dans le matériau de base, **caractérisé en ce que** la grosseur moyenne des particules, mesurée par analyse par tamisage selon la norme DIN 66165, se situe entre 100 µm et 2000 µm, de préférence à environ 500 µm.

10. Revêtement de sol selon l'une quelconque des revendications 1 à 9, dans lequel les particules sont intégrées dans le matériau de base, **caractérisé en ce que** la proportion de particules intégrées se situe entre 10 et 40% en volume, de préférence entre 14 et 25% en volume, du matériau de base.

11. Revêtement de sol selon l'une quelconque des revendications 1 à 10, **caractérisé en ce que** le matériau de base comprend les élastomères SBR (caoutchouc de polystyrène-butadiène), NBR (caoutchouc de nitrile-butadiène), EPM (caoutchouc d'éthylène-propylène), EPDM (caoutchouc d'éthylène-propylène-diène), EVA (éthylène-acétate de vinyle), CSM (caoutchouc de chlorosulfonyl-polyéthylène), VSi (caoutchouc de silicone) et/ou AEM (caoutchouc d'éthylène-acrylate), tant ceux réticulés au soufre, au peroxyde que par addition.

12. Revêtement de sol selon l'une quelconque des revendications 1 à 11, **caractérisé en ce que** le matériau de base comprend de manière connue en soi des charges de nature minérale, telles que par exemple l'argile, la craie, les silices et/ou le kieselguhr.
